# EUROPEAN PATENT APPLICATION

(11) **EP 2 479 416 A1**
(43) Date of publication of application: **25.07.2012**
(21) Application number: 11187194.3
(22) Date of filing: 28.10.2011
(51) Int. Cl.: F02M 21/06

(54) **Pressure regulator for fuel systems for motors of alternatively fuelled boats**

(30) Priority: 20.01.2011 IT PD20110014
(71) Applicant: CVO Technologies S.r.l., 31100 Treviso (IT)
(72) Inventor: Van Oevelen, Chris Albert Lea, 31100 TREVISO (IT)
(74) Representative: Mitola, Marco

(57) **Abstract**

Pressure regulator (4) for fuel systems (8) for motors (12) of alternatively fuelled motor boats, comprising a regulator body (20) which encloses an expansion chamber (24) which receives the fuel through a fuel inlet (28) at the supply pressure and allows its expansion and exit through a fuel outlet (32), at the delivery pressure. Around the expansion chamber (24) there being provided a heat exchange duct (36) having a coolant fluid inlet (40) and a coolant fluid outlet (44) so as to create a circulation of the motor coolant fluid (12) inside the pressure regulator (4). Advantageously, at least the heat exchange duct (36) of the regulator body (20) is made from at least two separate materials comprising a first base material and at least one layer of coating in corrosion-resistant material.

## Description

The present invention relates to a pressure regulator for fuel systems for motors of boats, and in particular for alternatively fuelled motor boats, such as LPG (liquid petroleum gas), methane, hydrogen and the like.

The invention also relates to a fuel system comprising said pressure regulator.

In particular, in alternatively fuelled motors, the fuel is usually compressed, in a liquid or gaseous phase, in tanks under high pressure.

Obviously, in order to be sent or supplied to the motor, the fuel must pass through pressure regulators, that is to say pressure vaporisers/reducers, in an accurate, controlled manner.

The fuel is then sent from the pressure regulators to the carburettor (possibly via a mixer) that is to injectors or solenoid valves which inject the fuel into the engine cylinders.

The reduction of pressure which takes place in the pressure regulator entails significantly lowering the fuel temperature. If the fuel is too cold, that is has too low a temperature, irregular functioning of the motor may ensue.

In fact, "cold" fuel tends to wet the inside walls of the cylinders without being combusted. A generally "lean" mixture and irregular functioning of the engines results, as well as an increase in consumption and pollutant emissions.

Such heat exchange, or heating, is usually performed by means of the water in the engine's cooling circuit. Such water is usually sea water drawn directly from under the waterline of the boat. The corrosive action of the sea water is particularly aggressive and damaging to the pressure regulator.

As a result the pressure regulator is subject to safety risks and uncontrolled leaks of LPG, heavy wear and corrosion which impose its frequent replacement with significant maintenance and running costs for the boat.

Moreover, the pressure regulator is provided with fuel supply and delivery ducts which are subject not only to the corrosive action of the marine environment but also to the significant vibrations transmitted from the boat and from the engine.

Such vibrations and corrosion contribute to damaging not only the regulator itself but also all the ducts connected to it. In this case too, the ducts of the prior art need replacing ahead of time.

In the light of the above, it follows that the pressure regulator devices of the prior art are not very reliable and require frequent and expensive replacements.

The purpose of the present invention is to overcome the drawbacks mentioned with reference to the prior art

Such drawbacks and limitations are resolved by a pressure regulator according to claim 1.

Other embodiments of the pressure regulator according to the invention are described in the subsequent claims.

Further characteristics and advantages of the present invention will be more clearly comprehensible from the description given below of its preferred and non-limiting embodiments, wherein:

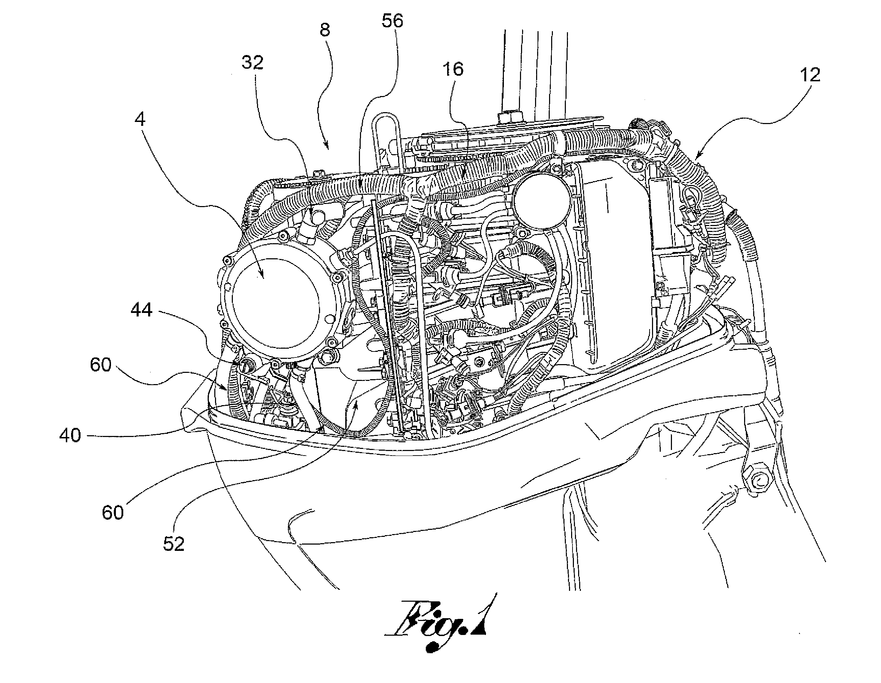

figure 1 shows a perspective view of a fuel system comprising a pressure regulator according to one embodiment of the present invention;

figure 2 shows a schematic view, in cross-section, of the pressure regulator illustrated in figure 1.

The elements or parts of elements common to the embodiments described below will be indicated using the same reference numerals.

With reference to the aforementioned figures, reference numeral 4 globally denotes a pressure regulator for fuel systems 8 for motors 12 of alternatively fuelled motor boats.

The present invention refers to any type of boat whether with an inboard or outboard motor.

The motor 12 may comprise either a 4 stroke or 2 stroke endothermic motor, provided, preferably, with carburettor or injection (direct or indirect) supply devices. Said motor 12 may be monofuel or bi-fuel. The gaseous fuel may be supplied by means of a mixer, solenoid valves, additional injectors or by means of the original petrol injectors. The motor 12 may also be a diesel motor in dual fuel.

The motor 12 may be operatively connected to means of propulsion of the boat, such as propellers, and/or to electricity generator means for the boat. In other words, the motor 8 may act as a means of propulsion and/or as a generator means of electricity.

Alternative fuels are understood to be fuels in an essentially gaseous state, typically LPG, methane, hydrogen used in place of more traditional fuels such as petrol and gas-oil.

The function of the regulator 4 is to receive the incoming fuel at a supply pressure and to deliver it in output at a delivery pressure, different from the supply pressure, so as to send the fuel to injection and/or solenoid valve devices 16 supplying the motor 12 with fuel.

According to one embodiment, the pressure regulator 4 comprises a regulator body 20 which encloses an expansion chamber 24 which receives the fuel through a fuel inlet 28 at the supply pressure and allows its expansion and exit through a fuel outlet 32, at the delivery pressure.

Preferably, a heat exchange duct 36 is provided around the expansion chamber 24 having a coolant fluid inlet 40 and a coolant fluid outlet 44 so as to create a circulation of the motor coolant fluid 12 inside the pressure regulator 4 to heat the fuel which expands, cooling, inside the expansion chamber 24.

For example, the heat exchange duct 36 has a spiral shape which winds itself around the expansion chamber 24. Such shape favours heat exchange and therefore the heating of the expansion chamber 24.

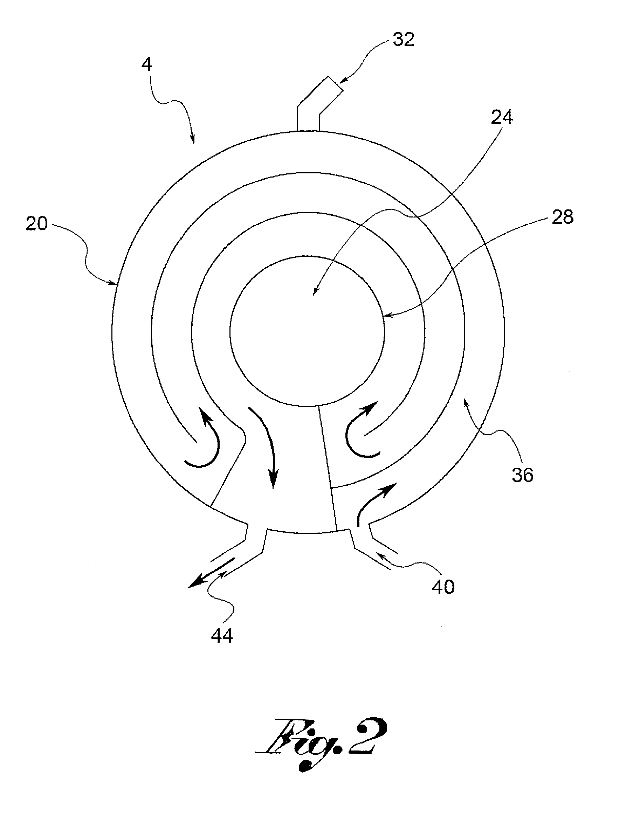

By way of example figure 2 shows by means of arrows the trajectory of the coolant liquid inside the heat exchange duct 36 from its introduction, through the inlet 40, to its expulsion through the outlet 44.

Advantageously, at least the heat exchange duct 36 of the regulator body 20 is made from at least two separate materials comprising a first base material and at least one layer of coating in corrosion-resistant material.

Preferably, the expansion chamber 24 is also made from at least two separate materials comprising a first base material and at least one layer of coating in corrosion-resistant material.

For example, as corrosion resistant material PVC, polyurethane, plastic or other or comparable (non-limitative) polymers may be used.

Moreover, as corrosion resistant material dacromet or other chemical substances resistant to the aggression of seawater or comparable (non-limitative) may be used.

According to one embodiment, the base material of the regulator body 20 is aluminium or a metal alloy comprising aluminium.

Preferably, the pressure regulator 4 comprises attachment means for the direct connection of the regulator to a portion of the associable alternatively fuelled motor 12, so as to result directly attached to a portion of said motor, such as a casing or bulkhead 52 of the same. This way the pressure regulator, together with the injection devices, receives the vibrations directly from the motor. For example the attachment means comprise screws, bolts, if necessary fitted with damper bushing, such as silent-block and the like.

Preferably, the pressure regulator 4 comprises connection ducts 56 with said fuel inlet 28 and with said fuel outlet 32 made from stainless steel. The connection ducts 56 also vibrate directly with the motor and the pressure regulator.

Making the connection ducts 56 with the fuel inlet 28 and with the fuel outlet 32 from a polymer material, such as rubber, polyethylene, propylene, PVC, polyamide or comparable (non-limitative) is also envisaged.

Preferably, the pressure regulator 4 comprises coolant liquid supply ducts 60, fluidically connected to said coolant liquid inlet and outlet 40, 44, made from stainless steel.

Making the coolant liquid supply ducts 60, fluidically connected to said coolant liquid inlet and outlet 40,44, from a polymer material, such as rubber, polyethylene, propylene, PVC, polyamide or comparable (non-limitative) is also envisaged.

The supply ducts 60 also vibrate directly with the motor and the pressure regulator.

The particular arrangement of the pressure regulator 4 directly attached to the motor 12 has been seen to limit the mechanical stresses transmitted to the connection 56 and supply ducts 60 and eliminates the risk of cracks.

Moreover, the materials used for said connection 56 and supply ducts 60 further prevent the formation of cracks inasmuch as particularly resilient, such as the stainless steel, or particularly suitable to dampen the vibrations, such as the polymer materials. According to one embodiment, the pressure regulator 4 is attached to the motor 12 or to a part connected to the motor 12 by means of interposed silent blocks, that is bushings to damp the vibrations.

As may be seen from the description, the system according to the invention makes it possible to overcome the drawbacks mentioned with reference to the prior art.

In particular, the pressure regulator according to the present invention proves extremely resistant to the corrosion of seawater, given its specific coating preventing the water from eating into the body of the regulator.

At the same time the costs of the reducer can be reduced by using, for example, an economical material to make the body and a different corrosion-resistant coating to apply to the parts more exposed to the corrosive action such as for example the heat exchange duct and/ or the expansion chamber.

In addition, the pressure regulator is attached directly to the motor. Various technical problems are thereby resolved.

In fact, both the regulator and the solenoid valves or injectors are subjected to the same source of vibrations ; this way the breakages caused by vibration for example of the supply ducts of the pressurised fuel to the reducer and of the expanded fuel to the solenoid valves of the motor, are limited.

Advantageously, the fuel supply and delivery ducts are also made in material resistant to corrosion by seawater so as not to incur breakages and require replacing.

A person skilled in the art may make numerous modifications and variations to the pressure regulators described above so as to satisfy contingent and specific requirements, while remaining within the sphere of protection of the invention as defined by the following claims

## Claims

1. Pressure regulator (4) for fuel systems (8) for motors (12) of alternatively fuelled motor boats,
the regulator (4) receiving the incoming fuel at a supply pressure and delivering it in output at a delivery pressure, different from the supply pressure, so as to send the fuel to injection and/or solenoid valve devices (16) which supply the motor (12) with fuel,
the regulator (4) comprising
- a regulator body (20) which encloses an expansion chamber (24) receiving the fuel through a fuel inlet (28) at the supply pressure and allowing its expansion and exit through a fuel outlet (32), at the delivery pressure,
- around the expansion chamber (24) there being provided a heat exchange duct (36) having a coolant fluid inlet (40) and a coolant fluid outlet (44) so as to create a circulation of the motor coolant fluid (12) inside the pressure regulator (4), to heat the fuel which expands, cooling, inside the expansion chamber (24),
- wherein at least the heat exchange duct (36) of the regulator body (20) is made from at least two separate materials comprising a first base material and at least one layer of coating in corrosion-resistant material.

2. Pressure regulator (4) according to claim 1, wherein said expansion chamber (24) is made from at least two separate materials comprising a first base material and at least one layer of coating in corrosion-resistant material.

3. Pressure regulator (4) according to claim 1 or 2, wherein said corrosion-resistant material comprises, for example PVC, polyurethane, plastic or other corrosion-resistant polymers.

4. Pressure regulator (4) according to claim 1 or 2, wherein said corrosion-resistant material comprises dacromet.

5. Pressure regulator (4) according to any of the previous claims, wherein the base material is aluminium or a metal alloy comprising aluminium.

6. Pressure regulator (4) according to any of the previous claims, wherein said regulator (4) comprises attachment means for the direct connection of the regulator (4) to a portion of the associable alternatively fuelled motor (12), so as to result directly attached to a portion (52) of said motor (12).

7. Pressure regulator (4) according to claim 6, wherein said attachment means of the pressure regulator (4) to the motor (12) or to a part connected to the motor (12) comprise silent blocks to damp the vibrations.

8. Pressure regulator (4) according to any of the previous claims, wherein the pressure regulator (4) comprises connection ducts (56) with said fuel inlet (28) and with said fuel outlet (32) made from stainless steel.

9. Pressure regulator (4) according to any of the previous claims, comprising connection ducts (56) with the fuel inlet (28) and with the fuel outlet (32) made from polymer material, such as rubber, polyethylene, propylene, PVC, polyamide.

10. Pressure regulator (4) according to any of the previous claims, comprising coolant liquid supply ducts (60), fluidically connected to said coolant liquid inlet and outlet (40, 44), made from stainless steel.

11. Pressure regulator (4) according to any of the previous claims, comprising coolant liquid supply ducts (60), fluidically connected to said coolant liquid inlet and outlet (40,44), made from polymer material, such as rubber, polyethylene, propylene, PVC, polyamide.

12. Fuel system (8) for motors (12) of alternatively fuelled motor boats comprising a pressure regulator (4) according to any of the claims from 1 to 11.
